# EUROPÄISCHE PATENTSCHRIFT

(11) **EP 2 588 552 B1**
(45) Veröffentlichungstag und Bekanntmachung des Hinweises auf die Patenterteilung: **20.01.2016**
(21) Anmeldenummer: 11738604.5
(22) Anmeldetag: 08.06.2011
(51) Int. Cl.: B32B 15/085, B32B 15/09, B32B 27/08, B32B 27/18, B32B 27/32, C09J 7/02

(54) **TRENNFOLIE MIT DAUERHAFT ANTISTATISCHER WIRKUNG**
RELEASE FILM WITH LONG-TERM ANTISTATIC EFFECT
FILM DE SÉPARATION À EFFET ANTISTATIQUE DE LONGUE DURÉE

(30) Priorität: 02.07.2010 DE 102010025938
(43) Veröffentlichungstag der Anmeldung: 08.05.2013
(73) Patentinhaber: Infiana Germany GmbH & Co. KG, 91301 Forchheim (DE)
(72) Erfinder: SCHMITZER, Siegfried, 97273 Kürnach (DE); PANHANS, Jürgen, 91056 Erlangen (DE)
(74) Vertreter: Kutzenberger, Helga
(86) Internationale Anmeldenummer: PCT/EP2011/002800
(87) Internationale Veröffentlichungsnummer: WO 2012/000602

(56) Entgegenhaltungen:
- JP-A- 2007 190 716
- JP-A- 2009 241 388
- US-A1- 2007 087 153

## Beschreibung

Die vorliegende Erfindung betrifft eine zumindest einseitig mit einer Releaseschicht (c) ausgerüstete Trennfolie gemäß Anspruch 1 umfassend wenigstens eine innenliegende Schicht (a) basierend auf wenigstens einem thermoplastischen Olfefin- Homo- oder Copolymeren ausgerüstet mit wenigstens eines dauerhaft antistatisch wirkenden, Polyetherpolyamid-Blockcopolymeren als Antistatikum und wenigstens eine Schicht (b) basierend auf wenigstens einem thermoplastischen Polymeren, wobei deren Releaseschicht (c) auf einem ausgehärtetem Polysiloxan basiert, ein Verfahren zu deren Herstellung und deren Verwendung als ablösbare Schutz- oder Abdeckfolie. Mehrschichtfolien aus thermoplastischen Kunststoffen, die eine Releaseschicht z.B. auf Basis eines Silikon-Polymers aufweisen, werden vielfach als Trennfolien für Klebebänder oder Selbstklebeetiketten eingesetzt, um ein Verkleben dieser einseitig oder beidseitig klebenden Produkte bei der Lagerung zu verhindern. Solche Trennfolien besitzen jedoch den Nachteil, dass sie sich bei der Herstellung, Lagerung und Verarbeitung statisch aufladen und dadurch verblocken, wodurch ihre Verarbeitung erschwert wird. Da eine solche ungewollte statische Aufladung vor allem über die Releaseschicht, insbesondere auf Basis einer Silikonschicht, erfolgt, kann es bei einer Entladung zu einer zumindest teilweisen Zerstörung der Releaseschicht und zu einem Verblocken der Klebstoffschicht mit der beschädigten Silikonschicht kommen.

Üblicherweise werden deshalb antistatisch ausgerüstete Trennfolien eingesetzt, um statische Aufladungen bei der Herstellung, Verarbeitung bzw. Lagerung zu vermeiden.

Antistatika sind Substanzen, die u.a. in eine Kunststoffmasse eingearbeitet oder auf die Oberfläche eines Kunststoffartikels aufgetragen werden, um eine elektrostatische Aufladung zu vermindern, wodurch sowohl die Staubanziehung als auch die Funkenentladung reduziert werden kann. Die elektrostatische Aufladung eines Kunststoffs lässt sich durch Erhöhen der Oberflächenleitfähigkeit bzw. der Volumenleitfähigkeit verringern.

Aus dem Stand der Technik sind bereits Trennfolien bekannt, die antistatisch ausgerüstet sind.

So wird in US2007/087153 A1 eine Trennfolie offenbart, die aus a) einer innenliegenden elektrisch leitfähigen antistatischen Schicht aus einem elektrisch leitfähigen Polymeren, bevorzugt Polyethylendioxythiphen/Polystyrolsulfonsäure, b) wenigstens einer Schicht aus einem thermoplastischen Polymer, bevorzugt aus PET und c) einer Releaseschicht aus einem vernetzten Polysiloxan besteht.

In JP 2007/190716 A wird eine Trennfolie offehnbart, die aus a) einer elektrisch leitfähigen antistatischen Oberflächenschicht aus Polyethylendioxythiphen/Polystyrolsulfonsäure, aus b) wenigstens einer Schicht aus einem thermoplastischen Polymer, vorzugsweise aus PET besteht und c) einer Releaseschicht bestehend aus vernetztem Polysiloxan.

Auch in JP 2009/241388 A wird eine antistatische Trennfolie bestehend aus a) einer inneren, antistatischen Schicht aus einem Polyether-Block-Polyestercopolymeren, c) einer fluorpolymerhaltigen Releaseschicht und b) einer zum Schutze der fluorpolymerhaltigen Schicht c) leicht ablösbaren Schutzschicht basierend auf einem Polyolefin beschrieben.

Nachteilig bei diesen antistatisch ausgerüsteten Trennfolien ist insbesondere, dass deren antistatische Wirkung entweder nur durch einen innenliegenden, vollflächigen Schichtauftrag bzw. einer außenliegenden, antistatisch ausgerichteten Schicht erzielt werden kann.

Weiterhin wird in EP 0 445 744 A2 eine antistatisch wirkende, mehrschichtige Polyesterfolie beschrieben, die neben der Releaseschicht eine weitere Schicht aufweist, die eine kationische quartäre Stickstoffverbindung als Antistatikum enthält. In US 2006/0222867 A1 wird eine Mehrschichtfolie beschrieben, welche neben der Releaseschicht eine weitere Schicht aufweist, die ein alkoxyliertes Amin als Antistatikum enthält.

Nachteilig bei diesen so ausgerüsteten Trennfolien ist, dass deren antistatische Wirkung nicht dauerhaft, sondern lediglich temporär ist. Zudem können die eingesetzen Antistatika durch ihre Tendenz zur Migration in weitere Schichten der Trennfolie negative Auswirkungen auf die Release-Eigenschaften und/oder auf die Reißfestigkeit und/oder auf die Verbundhaftung des Schichtverbundes der Trennfolie haben. Dies kann insbesondere bei mehrschichtigen Trennfolien auftreten, bei denen die Antistatika in eine innenliegende Schicht eingearbeitet sind und daher durch mehrere Schichten nach außen migrieren können. Diese negativen Auswirkungen nehmen meist proportional mit der Menge der zum Einsatz kommenden Antistatika zu, so dass deren Anteil, bezogen auf die gesamte Trennfolie, auch deswegen möglichst gering gehalten werden soll.

Es besteht daher ein Bedarf an Trennfolien, die die vorstehend genannten Nachteile nicht aufweisen.

Aufgabe der vorliegenden Erfindung war es daher, eine Trennfolie zur Verfügung zu stellen, die trotz einer ausreichenden dauerhaft antistatischen Wirkung höchstens einen vernachlässigbaren Einfluss auf die Release- und die mechanischen Eigenschaften durch das Antistatikum aufweisen.

Diese Aufgabe wird durch die Bereitstellung einer erfindungsgemäßen zumindest einseitig mit einer Releaseschicht (c), basierend auf einem ausgehärteten Polysiloxan, ausgerüsteten Trennfolie umfassend
(a) wenigstens eine innenliegende Schicht (a) basierend auf wenigstens einem thermoplastischen Olefin- Homo- oder Copolymeren ausgerüstet mit 10 - 20 Gew.%, bezogen auf das Gesamtgewicht der Schicht (a), wenigstens eines dauerhaft antistatisch wirkenden Polyetherpolyamid-Blockcopolymeren als Antistatikum, das eine gleichbleibend starke antistatische Wirkung der Trennfolie über den Zeitraum von wenigstens 12 Monaten unbeeeinflusst durch die relative Luftfeuchtigkeit der Umgebung, bewirkt. und
(b) wenigstens eine Schicht (b) basierend auf wenigstens einem thermoplastischen Polymeren,
gelöst.

Es wurde überraschenderweise gefunden, dass mit der erfindungsgemäßen Trennfolie eine dauerhaft antistatische Wirkung erzielt werden kann, obwohl die mit der dauerhaft antistatisch wirkenden Polyetherpolyamid-Blockcopolymeren als Antistatikum ausgerüstete Schicht (a) eine innenliegende Schicht ist und sich zwischen der Oberfläche der Trennfolie und dieser so ausgerüsteten Schicht (a) immer wenigstens eine unpolarere Schicht in Form der Schicht (b) und/oder einer Releaseschicht (c) basierend auf einem ausgehärteten Polysiloxan befindet, von der eine Blockierung der antistatischen Wirkung zu erwarten war. Überraschenderweise wird trotzdem eine dauerhaft antistatische Wirkung erreicht, obwohl die Releaseschicht (c) auf wenigstens einem ausgehärteten Polysiloxan basiert. Insbesondere zeichnet sich die erfindungsgemäße Trennfolie bei statischer Aufladung durch einen sehr guten Abkling-Effekt aus.

Unter dem Begriff "Abkling-Effekt" wird im Sinne dieser Erfindung eine Entladung z.B. der erfindungsgemäßen Trennfolie innerhalb von 30 Sekunden nach einer statischen Aufladung um wenigstens 60%, vorzugsweise um wenigstens 70%, besonders bevorzugt um wenigstens 80%, ganz besonders bevorzugt um wenigstens 90%, insbesondere vollständig um 100%, verstanden.

Es wurde ferner überraschend gefunden, dass durch die Ausrüstung der Schicht (a) mit der dauerhaft antistatisch wirkenden, vorstehend genannten Polymeren Verbindung als Antistatikum auf das Release-Verhalten und auf die mechanischen Eigenschaften wie Reißfestigkeit und/oder Verbundhaftung der Trennfolie praktisch kein Einfluss feststellbar ist.

Unter dem Begriff "dauerhaft antistatisch wirkend" bzw. "dauerhafte antistatische Wirkung" wird im Sinne dieser Erfindung eine gleichbleibend starke antistatische Wirkung der erfindungsgemäßen Trennfolie über einen Zeitraum von wenigstens 3, vorzugsweise wenigstens 5, besonders bevorzugt wenigstens 10, ganz besonders bevorzugt wenigstens 12 Monaten verstanden, wobei die dauerhafte antistatische Wirkung durch die relative Luftfeuchtigekeit der Umgebung, die sich ggf. ändert, nicht beeinflusst wird.

Zur Herstellung der Schicht (a) der erfindungsgemäßen Trennfolie eignet sich wenigstens ein thermoplastisches Olefin- Homo- oder Copolymeres.

Vorzugsweise können zur Herstellung der Schicht (a) thermoplastische Polyolefine thermoplastische Olefin-Homo-oder Copolymere von α,ß-ungesättigten Olefinen mit 2-10 Kohlenstoffatomen wie z.B. Polyethylene (PE, insbesondere LDPE oder HDPE), Polypropylene (PP), Polybutylene (PB), Polyisobutylene (PI) oder Mischungen aus wenigstens zwei der genannten Polymere eingesetzt werden. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Bevorzugte Polyolefine zur Herstellung der Schicht (a) sind Ethylen-Homo- oder Copolymere und Propylen-Homo- oder Copolymere.

Das als Antistatikum erfindungsgemäß eingesetzte, dauerhaft antistatisch wirkende, vorstehend genannte Polymere ist vorzugsweise ein nicht-migrierendes Antistatikum, d.h. ein Antistatikum, welches keine Migrationstendenzen in weitere Schichten der erfindungsgemäßen Trennfolie aufweist und daher in der mit dem Antistatikum ausgerüsteten innenliegenden Schicht (a) verbleibt.

Weiterhin zeichnen sich die zum Einsatz kommenden Antistatika durch eine dauerhafte, durch die relative Luftfeuchtigkeit der Umgebung nicht beeinflusste, antistatische Wirkung aus.

In der erfindungsgemäßen Trennfolie weist die Schicht (a) als Antistatikum wenigstens ein dauerhaft antistatisch wirkendes Polyetherpolyamid-Blockcopolymeres auf.

Vorzugsweise werden erfindungsgemäß als Antistatika keine lonomere, d.h. keine Olefin-(Meth)acrylsäure-Copolymere bzw. deren Salze eingesetzt.

In einer bevorzugten Ausführungsform der erfindungsgemäßen Trennfolie sind die als erfindungsgemäß eingesetzte Antistatika Polyetherpolyamid-Blockcopolymere, .Blockcopolymere aus wenigstens einem Polyamidblock und wenigstens einem Polyetherblock.

Für die Herstellung dieser Blockcopolymere können aliphatische, teilaromatische oder aromatische Polyamide eingesetzt werden. Diese Polyamide leiten sich von aliphatischen Diaminen mit 2-10 Kohlenstoffatomen wie z.B. Hexamethylendiamin, oder aromatischen Diaminen mit 6-10 Kohlenstoffatomen wie z. B. p-Phenylendiamin und aliphatischen oder aromatischen Dicarbonsäuren mit 6-14 Kohlenstoffatomen wie z.B. Adipinsäure, Terephthalsäure oder Isoterephthalsäure ab. Weiterhin können sich die Polyamide von Lactamen mit 4-10 Kohlenstoffatomen wie z.B. ε-Caprolactam ableiten. Vorzugsweise werden als Polyamidblöcke PA 6, PA 12, PA 66, PA 6I, PA 6T mit einem Molekulargewicht von 300 bis 100.000 g/mol, vorzugsweise von 500 bis 80.000 g/mol, vorzugsweise von 1000 bis 50.000 g/mol eingesetzt. Für die Herstellung der Blockcopolymere können (cyclo)aliphatische, teilaromatische oder aromatische Polyether eingesetzt werden, die eine wiederkehrende Struktureinheit -[-O-X-]- aufweisen, wobei X ein aliphatischer, cycloaliphatischer, aromatischer oder aromatisch-aliphatischer Rest ist. Bevorzugte Polyether sind Polyethylenoxide, Polypropylenoxide, Poly(trimethylen)oxide, Polybutylenoxide, Polystyroloxide, Ethylenoxid/Propylenoxid-Copolyether, Poly(tetrahydrofurane), Copolymere von Struktur-Einheiten der genannten Polyether oder Mischungen von wenigstens zwei der genannten Polyether. Bevorzugt weisen die Polyether ein Molekulargewicht von 100 bis 50.000 g/mol, besonders bevorzugt von 150 bis 30.000 g/mol, ganz besonders bevorzugt von 200 bis 10.000 g/mol auf.

Die erfindungsgemäße Trennfolie weist in der Schicht (a) 10 - 20 Gew.-%, vorzugsweise 11 - 16 Gew.-%, jeweils bezogen auf das Gesamtgewicht der Schicht (a), wenigstens eines Antistatikums auf.

In einer bevorzugten weist die erfindungsgemäße Trennfolie 0,5 - 3,0 Gew.-%, vorzugsweise 1,0 - 2,5 Gew.-%, jeweils bezogen auf das Gesamtgewicht der Trennfolie, wenigstens eines Antistatikums auf.

In einer bevorzugten Ausführungsform wird das Antistatikum in multipartikulärer Form, besonders bevorzugt fein verteilt in Pulverform bei der Herstellung der Trennfolie zugegeben.

Vorzugsweise neigt das Antistatikum zur Unverträglichkeit mit dem zur Herstellung der Schicht (a) eingesetzen thermoplastischen Polymeren, d.h. mit dem Matrix-Polymeren der Schicht (a). Aufgrund der Unverträglichkeit kommt es bei der Herstellung der Schicht (a) insbesondere beim Abkühlen zu einer Art Netzbildung des Antistatikums in der Schicht (a).

Vorzugsweise sollte der Schmelzpunkt des Antistatikums um wenigstens 10°C, besonders bevorzugt um wenigstens 20°C, ganz besonders bevorzugt um wenigstens 30°C höher als der Schmelzpunkt des thermoplastischen Polymeren, auf dem die Schicht (a) basiert, sein.

Vorzugsweise weist die erfindungsgemäße Trennfolie wenigstens zwei innenliegende Schichten (a), besonders bevorzugt zwei Schichten (a) (die Schichten (a₁) und (a₂)) auf, die jeweils mit einem Antistatikum ausgerüstet sind. Vorzugsweise entspricht dabei die Gesamtmenge, bezogen auf die Schichten (a₁) und (a₂), des dotierten Antistatikums der vorstehend angegebenen Gesamtmenge für das Antistatikum. Dabei kann die Ausrüstung der beiden Schichten (a₁) und (a₂) mit einem identischen oder einem unterschiedlichen Antistatikum erfolgen. Dabei können die beiden Schichten (a₁) und (a₂) mit einer identischen oder einer unterschiedlichen Menge des Antistatikums ausgerüstet sein.

In einer bevorzugten Ausführungsform weist die erfindungsgemäße Trennfolie eine Schicht (a) auf, die unmittelbar mit der Releaseschicht (c) als Oberflächenschicht ausgerüstet ist.

Die Schicht (a) der erfindungsgemäßen Trennfolie weist vorzugsweise eine Schichtdicke von 5 µm bis 100 µm, bevorzugt von 10 µm bis 90 µm, besonders bevorzugt von 20 µm bis 80 µm, auf.

Vorzugsweise liegt das Verhältnis der Gesamtschichtdicke der erfindungsgemäßen Trennfolie zur Gesamtschichtdicke der Schicht(en) (a) im Bereich von wenigstens 2:1, vorzugsweise wenigstens 3:1, besonders bevorzugt wenigstens 4:1, ganz besonders bevorzugt wenigstens 7:1.

Zur Herstellung der Schicht (b) der erfindungsgemäßen Trennfolie eignen sich dieselben thermoplastischen Polymere, welche auch zur Herstellung der Schicht (a) eingesetzt werden können, wobei die jeweilige Schicht auf denselben oder einer unterschiedlichen Art von Polymeren basieren kann.

Vorzugsweise eignet sich zur Herstellung der Schicht (b) der erfindungsgemäßen Trennfolie dabei wenigstens ein thermoplastisches Olefin Homo-oder Copolymer, besonders bevorzugt wenigstens ein thermoplastisches Olefin Homo-oder Copolymer ausgewählt aus der Gruppe umfassend Ethylen-Homo- oder Copolymere und Propylen-Homo- oder Copolymere, ganz besonders bevorzugt wenigstens ein Polyethylen oder Polypropylen.

Die Schicht (b) der erfindungsgemäßen Trennfolie weist vorzugsweise eine Schichtdicke von 5 µm bis 100 µm, besonders bevorzugt von 10 µm bis 90 µm, ganz besonders bevorzugt von 20 µm bis 80 µm, auf.

In einer bevorzugten Ausführungsform der erfindungsgemäßen Trennfolie grenzt an die Schicht (b) an eine innenliegende Schicht (a) an und weist vorzugsweise auf ihrer anderen Oberfläche, bzw. Grenzfläche, eine Releaseschicht (c) auf.

In einer weiteren bevorzugten Ausführungsform der erfindungsgemäßen Trennfolie weist die Trennfolie in Bezug auf eine zentrale Schicht (b) einen symmetrischen Aufbau auf.

In einer anderen bevorzugten Ausführungsform der erfindungsgemäßen Trennfolie weist die Trennfolie in Bezug auf eine zentrale Schicht (b) einen asymmetrischen Aufbau auf.

Die Releaseschicht (c) der erfindungsgemäßen Trennfolie basiert vorzugsweise auf wenigstens einem aushärtbaren Polysiloxan.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäß eingesetzte Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die Releaseschicht (c) basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte, kationisch vernetzte und/oder durch Feuchtigkeitseinwirkung vernetzte Polysiloxane.

Vorzugsweise basiert die Releaseschicht (c) auf wenigstens einem ausgehärteten Polysiloxan, das durch thermische Aushärtung, durch Aushärtung mit elektromagnetischer Strahlung, vorzugsweise durch UV-Strahlung, oder durch Feuchtigkeitseinwirkung ausgehärtet wurde. Bevorzugt basiert die Releaseschicht (c) der erfindungsgemäßen Trennfolie auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind.

Thermisch ausgehärtete Polysiloxane werden durch thermische Hydrosilylierung von Silan-Funktionen aufweisenden Polysiloxanen mit einer zumindest eine Kohlenstoff-Doppelbindung aufweisenden Verbindung erhalten. Bei den durch elektromagnetische Strahlung ausgehärteten Polysiloxanen ist die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Die auszuhärtenden Polysiloxane weisen daher jeweils die für die Vernetzung benötigten miteinander reagierenden funktionellen Gruppen auf.

Die Releaseschicht (c) der erfindungsgemäßen Trennfolie weist vorzugsweise eine Schichtdicke von 0,1 µm bis ≤ 3 µm, vorzugsweise von 0,2 µm bis 1,5 µm auf.

Die erfindungsgemäße Trennfolie ist zumindest einseitig auf einer ihrer Oberflächen mit einer Releaseschicht (c) ausgerüstet.

In einer weiteren bevorzugten Ausführungsform kann die erfindungsgemäße Trennfolie auch beidseitig auf beiden Oberflächen mit einer Releaseschicht (c) ausgerüstet sein.

In einer ganz bevorzugten Ausführungsform weist die erfindungsgemäße Trennfolie eine zentrale Schicht (b) auf, welche auf jeder ihrer Oberflächen mit jeweils einer Schicht (a) verbunden ist, wobei beide freien Oberflächen der Schicht (a) mit einer Releaseschicht (c) ausgerüstet sind.

In einer anderen ganz bevorzugten Ausführungsform weist die erfindungsgemäße Trennfolie eine zentrale Schicht (a) auf, welche auf jeder ihrer Oberflächen mit jeweils einer Schicht (b) verbunden ist, wobei zumindest eine der beiden freien Oberflächen der Schichten (b) mit einer Releaseschicht (c) ausgerüstet ist.

In einer weiteren ganz bevorzugten Ausführungsform weist die erfindungsgemäße Trennfolie eine zentrale Schicht (b) auf, welche auf einer ihrer Oberflächen bzw. Grenzflächen mit einer Schicht (a) und auf ihrer anderen Oberfläche bzw. Grenzfläche mit einer zweiten Schicht (b) verbunden ist, wobei die freie Oberfläche der Schicht (a) mit einer Releaseschicht (c) ausgerüstet ist und die freie Oberfläche der zweiten Schicht (b) ggf. mit einer Releaseschicht (c) ausgerüstet ist.

In einer weiteren ganz bevorzugten Ausführungsform weist die erfindungsgemäße Trennfolie eine zentrale Schicht (b) auf, welche auf jeder ihrer Oberflächen mit einer Schicht (a) (Schichten (a₁) und (a₂)) verbunden ist, wobei die freien Oberflächen bzw. Grenzflächen dieser Schichten (a) (Schichten (a₁) und (a₂)) jeweils mit einer weiteren Schicht (b) verbunden sind, wobei zumindest eine der beiden freien Oberflächen dieser Schichten (b) mit einer Releaseschicht (c) ausgerüstet ist.

In einer bevorzugten Ausführungsform der erfindungsgemäßen Trennfolie kann die mit der Releaseschicht (c) ausgerüstete Oberfläche der Trennfolie eine asymmetrische Struktur entsprechend der Geometrie des in der Schicht (a) verteilten teilchenförmigen Antistatikums aufweisen. Vorzugsweise weist die gesamte mit einer Releaseschicht (c) ausgerüstete Oberfläche der Trennfolie eine solche asymmetrische Struktur auf, wobei vorzugsweise unter einer asymmetrische Struktur wiederkehrende Erhebungen und Vertiefungen auf der Oberfläche zu verstehen. Die als abzulösende Kontaktstellen zu einem Substrat vorgesehenen Erhebungen der asymmetrischen Struktur der erfindungsgemäßen Trennfolie weisen dabei vorzugsweise eine Höhe von ≥ 2 µm, vorzugsweise von ≥ 4 µm, besonders bevorzugt von ≥ 6 µm durch das zugegebene Antistatikum auf.

Die Releaseschicht (c) sowie die Schichten (a) und (b), können, wenn notwendig, jeweils unabhängig voneinander, mit Zusatzstoffen ausgewählt aus der Gruppe umfassend Antioxidantien, Antiblockmittel, Antifogmittel, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein. Dabei darf die Trennwirkung der Releaseschicht (c) nicht beeinflusst werden und muss erhalten bleiben. Ferner darf dabei die dauerhaft antistatische Wirkung des Antistatikums in der Schicht (a) nicht beeinflusst werden und muss erhalten bleiben.

Die Releaseschicht (c) sowie die Schichten (a) und (b), können, wenn notwendig, jeweils unabhängig voneinander wenigstens 0,01-30 Gew.-%, vorzugsweise wenigstens 0,1-20 Gew.-%, jeweils bezogen auf das Gesamtgewicht einer einzelnen Schicht, wenigstens einen der vorstehend genannten Zusatzstoffe enthalten.

Vorzugsweise weist wenigstens eine Oberfläche der Trennfolie, besonders bevorzugt die mit der Releaseschicht (c) ausgerüstete Oberfläche der Trennfolie einen Oberflächenwiderstand von 1·10⁹ bis 9·10¹³ Ω, besonders bevorzugt von 1·10⁹ bis 9·10¹¹ Ω auf. Der Oberflächenwiderstand wird nach DIN IEC 93 VDE 0303 oder nach der nachstehend angegebenen Methode 2 bestimmt und in [Ω] angegeben.

Die erfindungsgemäße Trennfolie weist vorzugsweise eine Gesamtschichtdicke von 15 µm bis 300 µm, besonders bevorzugt von 30 µm bis 250 µm, ganz besonders bevorzugt von 40 µm bis 200 µm, auf.

Ein weiterer Gegenstand der vorliegenden Erfindung ist ein Verfahren zur Herstellung der erfindungsgemäßen Trennfolie.

Die Herstellung der erfindungsgemäßen Trennfolie kann nach bekannten Herstellungsverfahren wie z.B. Laminierung oder (Co)-Extrusion, vorzugsweise durch Co-Extrusion erfolgen. Dabei ist zu beachten, dass die Dotierung der Schicht (a) mit dem erfindungsgemäß zum Einsatz kommenden Antistatikum durch Abmischen des Antistatikums oder durch Abmischen eines Masterbatches aus Antistatikum und einem zur Herstellung der Schicht (a) geeigneten thermoplastischen Polymeren mit einem zur Herstellung der Schicht (a) eingesetzten thermoplastischen Polymeren erfolgt. Dieses Abmischen kann in Granulat/Pulver- oder Granulat/Granulat-Form trocken erfolgen. Es ist aber auch möglich, das Antistatikum der Schmelze des zur Herstellung der Schicht (a) thermoplastischen Polymeren zuzugeben, vorzugsweise durch Zudosierung in einem für die Extrusion der Schicht (a) verwendeten Extruder.

Dabei können sowohl einzelne als auch sämtliche Schichten (a) und (b) der erfindungsgemäßen Trennfolie durch Extrusion, vorzugsweise durch Flachfolien-Extrusion (Cast-Extrusion) oder Blasfolien-Extrusion, insbesondere durch Flachfolien-Co-Extrusion (Cast-Co-Extrusion) oder Blasfolien-Co-Extrusion gebildet werden.

In einer bevorzugten Ausführungsform können die Schichten (a) und (b) der erfindungsgemäßen Trennfolie als gesamter mehrschichtiger Folienverbund in Form einer Schlauchfolie produziert und verarbeitet werden.

In einer weiteren bevorzugten Ausführungsform können die Schichten (a) und (b) der erfindungsgemäßen Trennfolie insgesamt als Cast-Folienverbund produziert und verarbeitet werden.

Dementsprechend kann die Herstellung der einzelnen Schichten (a) und (b) der erfindungsgemäßen Trennfolie vorzugsweise durch (Co)-Extrusion erfolgen.

Die Schicht (a), ausgerüstet mit wenigstens einer dauerhaft antistatisch wirkenden, vorstehend angegebenen Polymeren als Antistatikum oder die Schicht (b) oder ein Schichtverbund umfassend wenigstens eine solche mit wenigstens einem erfindungsgemäß eingesetztem Antistatikum ausgerüstete Schicht (a) und wenigstens eine Schicht (b) wird vorzugsweise auf einer oder auf beiden Oberflächen, d.h. einseitig oder beidseitig, vorzugsweise nur einseitig, mit der Releaseschicht (c) basierend auf wenigstens einem noch nicht ausgehärteten Polysiloxan sowie ggf. wenigstens einem vorstehend genannten Zusatzstoff ausgerüstet, vorzugsweise beschichtet, und mit wenigstens einer der vorstehend genannten Schichten oder Schichtverbunde verbunden. Die Aushärtung des noch nicht ausgehärteten Polysiloxans oder der Mischung des noch nicht ausgehärteten Polysiloxans und wenigstens eines vorstehend genannten Zusatzstoffes zur Releaseschicht (c) erfolgt vorzugsweise durch Einwirkung von Wärme oder von elektromagnetischer Strahlung, ggf. durch Zusatz wenigstens eines UV-Initiators und/oder eines Radikalstarters in das nicht ausgehärtete Polysiloxans oder in die Mischung. Ggf. kann die Trennfolie nach der Beschichtung bzw. Aushärtung geprägt werden.

Die jeweiligen Herstellungsverfahren und entsprechende Produktionsparameter sind dem Fachmann allgemein bekannt.

In einer bevorzugten Ausführungsform wird ein mehrschichtiger Verbund aus wenigstens einer Schicht (a) ausgerüstet mit wenigstens einem Antistatikum und wenigstens einer Schicht (b) durch (Co)-Extrusion unter Aufschmelzen der jeweiligen Komponente oder durch Laminierung hergestellt und der Verbund anschließend zumindest auf einer Oberfläche mit einer Releaseschicht (c) beschichtet, wobei durch Einwirkung von Wärme oder elektromagnetischer Strahlung, ggf. durch Zusatz wenigstens eines UV-Initiators und/oder eines Radikalstarters, die Releaseschicht (c) auf Basis von Polysiloxan mit dem übrigen Verbund verbunden und ausgehärtet wird.

Jede der Schichten (a) und (b) der erfindungsgemäßen Trennfolie kann ggf. einer Oberflächen-Behandlung wie z.B. einer Corona-Behandlung, einer PlasmaBehandlung und/oder einer Flamm-Behandlung unterworfen werden, vorzugsweise vor dem Aufbringen wenigstens einer Releaseschicht (c), wobei besonders bevorzugt eine Corona-Behandlung durchgeführt wird.

Die erfindungsgemäße Trennfolie kann vorzugsweise bedruckt und/oder farbig und/oder geprägt sein.

Die erfindungsgemäße Trennfolie wird vorzugsweise als entfernbare Schutzfolie oder entfernbare Abdeckfolie eingesetzt.

Ein weiterer Gegenstand der vorliegenden Erfindung ist daher die Verwendung der erfindungsgemäßen Trennfolie als entfernbare Schutz- oder Abdeckfolie, vorzugsweise für klebefähige Schichten von Selbstklebeetiketten, Klebebändern, und/oder Aufklebern.

Die erfindungsgemäße Trennfolie kann auch als Zwischenlagenfolie, vorzugsweise als Rondell-Folie, eingesetzt werden.

Ein weiterer Gegenstand der vorliegenden Erfindung ist daher die Verwendung der erfindungsgemäßen Trennfolie als Zwischenlagenfolie, vorzugsweise als Rondell-Folie.

### Bestimmung des Oberflächenwiderstands

### Methode 1:

Der Oberflächenwiderstand kann nach DIN IEC 93 VDE 0303 bestimmt und in [Ω] angegeben werden.

### Methode 2:

Der Oberflächenwiderstand der erfindungsgemäßen Trennfolie kann alternativ wie nachfolgend beschrieben bestimmt und in [Ω] angegeben werden:
Eine Probe einer erfindungsgemäßen Trennfolie oder einer Vergleichsfolie (300 mm x 100 mm) wird mit der Oberfläche, von der der Oberflächenwiderstand bestimmt werden soll, in ein geeignetes Messgerät zur Bestimmung der elektostatischen Eigenschaften von Kunsstofffolien wie z.B. in dem Messgerät QUMAT®-428 der Firma Quma (Wuppertal, Deutschland) mit Hilfe von Magnetspannern eingesetzt. Zuerst wird die auf der zu untersuchenden Oberfläche der jeweiligen Probe vorhandene Feldstärke in kV/m gemessen, dann die Oberfläche der Probe entladen, und anschließend auf eine bestimmte definierte Feldstärke aufgeladen. Im Anschluss daran wird die Abnahme der Feldstärke in einem bestimmten Zeitintervall wie z.B. innerhalb von 30 Sekunden gemessen. Der Oberflächenwiderstand der untersuchten Oberfläche der jeweiligen Probe kann aus den ermittelten Messwerten berechnet werden.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

- Antistatikum A:: Cesa-Stat® OCA 0025612 der Firma Clariant (Polyetherpolyamid-Blockcopolymer)

### II. Herstellung der Trennfolien

Die einzelnen Schichten der Trennfolien gemäß den Beispielen 1-8 (**B1-B8**) grenzen jeweils in der dort angegebenen Reihenfolge unmittelbar aneinander. Der Schichtverbund aus den Schichten (a) und (b) der Trennfolie gemäß den Beispielen **B1-B8** wurden durch Blasfolien-Co-Extrusion hergestellt und in einem nachfolgenden Arbeitsgang einseitig oder beidseitig mit einer Releaseschicht (c) beschichtet.

### III. Beispiele

Alle nachfolgenden %-Angaben sind jeweils Gew.-%.

### III.1 Beispiel 1 (B1)

| *Schichtaufbau **B1,** (Schichtdicke)* | *Rohstoffe **B1*** |
|---|---|
| Releaseschicht (c) (1,0 µm) | Polysiloxan (100%) |
| Schicht (b) (23 µm) | Polypropylen (100%) |
| Schicht (a) (34 µm) | Polypropylen (86%), A (14,0%) |
| Schicht (b) (23 µm) | Polypropylen (100%) |
| Releaseschicht (c) (1,0 µm) | Polysiloxan (100%) |

### III.2 Beispiel 2 (B2)

| *Schichtaufbau **B2,** (Schichtdicke)* | *Rohstoffe **B2*** |
|---|---|
| Releaseschicht (c) (1,0 µm) | Polysiloxan (100%) |
| Schicht (b) (14 µm) | Polypropylen (100%) |
| Schicht (a) (22 µm) | Polypropylen (86%), A (14,0%) |
| Schicht (b) (14 µm) | Polypropylen (100%) |

### III.3 Beispiel 3 (B3)

| *Schichtaufbau **B3,** (Schichtdicke)* | *Rohstoffe **B3*** |
|---|---|
| Releaseschicht (c) (0,5 µm) | Polysiloxan (100%) |
| Schicht (a) (17 µm) | Polypropylen (86%), A (14,0%) |
| Schicht (b) (26 µm) | Polypropylen (100%) |
| Schicht (b) (17 µm) | Polypropylen (100%) |
| Releaseschicht (c) (0,5 µm) | Polysiloxan (100%) |

### III.4 Beispiel 4 (B4)

| *Schichtaufbau **B4,** (Schichtdicke)* | *Rohstoffe **B4*** |
|---|---|
| Releaseschicht (c) (1,1 µm) | Polysiloxan (100%) |
| Schicht (a) (23 µm) | LDPE (86%), A (14,0%) |
| Schicht (b) (34 µm) | LDPE (100%) |
| Schicht (b) (23 µm) | LDPE (100%) |

### III.5 Beispiel 5 (B5)

| *Schichtaufbau **B5,** (Schichtdicke)* | *Rohstoffe **B5*** |
|---|---|
| Releaseschicht (c) (0,5 µm) | Polysiloxan (100%) |
| Schicht (b) (23 µm) | HDPE (100%) |
| Schicht (a) (11 µm) | HDPE (86%), A (14,0%) |
| Schicht (b) (12 µm) | HDPE (100%) |
| Schicht (b) (11 µm) | HDPE (100%) |
| Schicht (b) (23 µm) | HDPE (100%) |
| Releaseschicht (c) (1,0 µm) | Polysiloxan (100%) |

### III.6 Beispiel 6 (B6)

| *Schichtaufbau **B6,** (Schichtdicke)* | *Rohstoffe **B6*** |
|---|---|
| Releaseschicht (c) (1,0 µm) | Polysiloxan (100%) |
| Schicht (a) (8 µm) | Polypropylen (86%), A (14,0%) |
| Schicht (b) (14 µm) | Polypropylen (100%) |
| Schicht (a) (8 µm) | Polypropylen (86%), A (14,0%) |
| Releaseschicht (c) (1,0 µm) | Polysiloxan (100%) |

### III.7 Beispiel 7 (B7)

| *Schichtaufbau **B7,** (Schichtdicke)* | *Rohstoffe **B7*** |
|---|---|
| Releaseschicht (c) (1,0 µm) | Polysiloxan (100%) |
| Schicht (b) (28 µm) | Polypropylen (100%) |
| Schicht (a) (14 µm) | Polypropylen (86%), A (14,0%) |
| Schicht (b) (14 µm) | Polypropylen (100%) |
| Schicht (b) (14 µm) | Polypropylen (100%) |
| Schicht (a) (28 µm) | Polypropylen (86%), A (14,0%) |
| Releaseschicht (c) (1,1 µm) | Polysiloxan (100%) |

### III.8 Beispiel 8 (B8)

| *Schichtaufbau **B8,** (Schichtdicke)* | *Rohstoffe **B8*** |
|---|---|
| Releaseschicht (c) (0,6 µm) | Polysiloxan (100%) |
| Schicht (b) (55 µm) | HDPE (100%) |
| Schicht (a) (26 µm) | HDPE (86%), A (14,0%) |
| Schicht (b) (28 µm) | HDPE (100%) |
| Schicht (b) (28 µm) | HDPE (100%) |
| Schicht (b) (28 µm) | HDPE (100%) |

### IV. Dauerhaft antistatische Wirkung

Zur Bestimmung der Dauerhaftigkeit der antistatischen Wirkung der Trennfolien der Beispiele 1-8 (**B1-B8**) wurde der Oberflächenwiderstand auf jeder der beiden Oberflächen der Trennfolien gemäß vorstehend beschriebener *Methode* 2 bestimmt, wobei zu dieser Bestimmung das Gerät QUMAT®-428 der Firma Quma eingesetzt und die Abnahme der Feldstärke in einem Zeitintervall von 30 Sekunden gemessen wurde. Dabei ergab sich für jede Oberfläche jeweils ein Oberflächenwiderstand im Bereich von 1·10⁹ bis 9·10¹¹ Ω bei Messung unmittelbar nach Herstellung der Trennfolien.

Jede der Trennfolien gemäß den Beispielen 1-8 (**B1-B8**) wurde nach der Anfangsmessung 12 Monate gelagert und der Oberflächenwiderstand jeweils auf jeder Oberfläche der einzelnen Trennfolien gemäß den Beispielen 1-8 (**B1-B8**) mittels der Methode 2 bestimmt. Für alle Trennfolien ergab sich für jede Oberfläche jeweils wieder ein Oberflächenwiderstand im Bereich von 1·10⁹ bis 9·10¹¹. Die Lagerung erfolgte unter normalen Umgebungsbedingungen, d.h. bei einer Raumtemperatur von ca. 23°C. Die ermittelten Oberflächenwiderstandswerte waren unabhängig von der relativen Luftfeuchtigkeit der Umgebung. Die dauerhafte antistatische Wirkung ist somit durch Änderung der relativen Luftfeuchtigkeit nicht beeinflusst.

## Patentansprüche

1. Eine zumindest einseitig mit einer auf wenigstens einem ausgehärteten Polysiloxan basierenden Releaseschicht (c) ausgerüstete Trennfolie umfassend
(a) wenigstens eine innenliegende Schicht (a) basierend auf wenigstens einem thermoplastischen Olefin- Homo- oder Copolymeren ausgerüstet mit 10 - 20 Gew.-%, bezogen auf das Gesamtgewicht der Schicht (a), wenigstens eines dauerhaft antistatisch wirkenden Polyetherpolyamid-Blockcopolymeren als Antistatikum, das eine gleichbleibend starke antistatische Wirkung der Trennfolie über den Zeitraum von wenigstens 12 Monaten unbeeinflusst durch die relative Luftfeuchtigkeit der Umgebung, bewirkt,
und
(b) wenigstens eine Schicht (b) basierend auf wenigstens einem thermoplastischen Polymeren.

2. Eine Trennfolie nach Anspruch 1, **dadurch gekennzeichnet, dass** die innenliegende Schicht (a) 11 - 16 Gew.-%, bezogen auf das Gesamtgewicht der Schicht (a), des Antistatikums aufweist.

3. Eine Trennfolie nach einem der vorstehenden Ansprüche, **dadurch gekennzeichnet, dass** die Trennfolie wenigstens zwei innenliegende Schichten (a) (Schichten (a₁) und (a₂) jeweils ausgerüstet mit dem Antistatikum umfasst.

4. Eine Trennfolie nach einem der vorstehenden Ansprüche, **dadurch gekennzeichnet, dass** eine Schicht (b) unmittelbar mit der Releaseschicht (c) als Oberflächenschicht ausgerüstet ist und mit ihrer anderen Grenzfläche an eine innenliegende Schicht (a) angrenzt.

5. Eine Trennfolie nach einem der vorstehenden Ansprüche, **dadurch gekennzeichnet, dass** das Verhältnis der Gesamtschichtdicke der Trennfolie zur Gesamtschichtdicke der Schicht(en) (a) im Bereich von wenigstens 2:1 liegt.

6. Eine Trennfolie nach Anspruch 5, **dadurch gekennzeichnet, dass** das Verhältnis im Bereich von wenigstens 7:1 liegt.

7. Eine Trennfolie nach einem der vorstehenden Ansprüche, **dadurch gekennzeichnet, dass** die Schicht (b) auf wenigstens einem Olefin Homo- oder Copolymeren basiert.

8. Eine Trennfolie nach Anspruch 7, **dadurch gekennzeichnet, dass** die Schicht (b) auf wenigstens einem Polyethylen und/oder Polypropylen basiert.

9. Ein Verfahren zur Herstellung einer Trennfolie nach einem der vorstehenden Ansprüche, **dadurch gekennzeichnet, dass** ein Schichtverbund aus wenigstens einer Schicht (a) ausgerüstet mit wenigstens einem dauerhaft antistatisch wirkenden Polyethylenpolyamid-Blockcopolymeren als Antistatikum und wenigstens einer Schicht (b) durch (Co)-Extrusion oder durch Laminierung hergestellt und der Schichtverbund zumindest auf einer seiner Oberflächen mit einer Releaseschicht (c) ausgerüstet wird.

10. Eine Verwendung einer Trennfolie nach einem der Ansprüche 1 bis 8 als ablösbare Schutz- oder Abdeckfolie.

11. Eine Verwendung nach Anspruch 10 für klebefähige Selbstklebeetiketten, Klebebänder und/oder Aufkleber.

12. Eine Verwendung einer Trennfolie nach einem der Ansprüche 1 bis 8 als Rondell-Folie.

## Claims

1. A release film equipped on at least one of its surfaces with a release layer (c) being based on at least one cured polysiloxane and comprising
(a) at least one inside layer (a) based on at least one thermoplastic olefin-homopolymer or copolymer, equipped with 10-20% by weight, based on the total weight of layer (a), of at least one polyetherpolyamide block copolymer as long-term antistaticum providing a consistently strong antistatic effect over a period of at least 12 months uneffected by the relative atmospheric humidity of the environment and
(b) at least one layer (b) based on at least one thermoplastic polymer.

2. A release film as claimed in claim 1, **characterized in that** the inside layer (a) contains 11%-16% by weight, based on the total weight of the layer (a), of the antistaticum.

3. A release film as claimed in claim 1 or 2, **characterized in that** the release film comprises at least two inside layers (a), layer (a₁) and (a₂), each equipped with the antistaticum.

4. A release film as claimed in any of the preceding claims, **characterized in that** a layer (b) is equipped directly with the release layer (c) as surface layer and
adjoins by its other boundary surface an inside layer (a).

5. A release film as claimed in any of the preceding claims, **characterized in that** the ratio of the total layer thickness of the release film to the total layer thickness of the layer (s) (a) is in the region of at least 2:1.

6. A release film as claimed in claim 5, **characterized in that** the ratio of the total layer thickness of the release film to the total layer thickness of the layer(s) (a) is in the region of at least 7:1.

7. A release film as claimed in any of the preceding claims, **characterized in that** the layer (b) is based on at least one olefin homopolymer or copolymer.

8. A release film as claimed in claim 7, **characterized in that** the layer (b) is based on at least one polyethylene and/or polypropylene.

9. A method for producing a release film as claimed in any of the preceding claims, **characterized in that** a layer assembly of at least one layer (a) equipped with at least one polyetherpolyamide block copolymer as antistaticum having a long-term antistatic effect, and with at least one layer (b) is produced by (co) extrusion or by lamination and the layer assembly is equipped at least on one of its surfaces with a release layer (c).

10. The use of a release film as claimed in any one of claims 1 to 8 as a removable protective or liner film.

11. The use as claimed in claim 10 for adhesive self-adhesive labels, adhesive tapes and/or stickers.

12. The use of a release film as claimed in any one of claims 1 to 8 as a film between blanks.

## Revendications

1. Feuille de séparation munie sur au moins un côté d'une couche de séparation (c) à base d'au moins un polysiloxane durci, comprenant
(a) au moins une couche intérieure (a) à base d'au moins un homo- ou copolymère d'oléfine thermoplastique munie de 10 à 20 % en poids, par rapport au poids total de la couche (a), d'au moins un copolymère séquencé polyéther-polyamide à effet antistatique durable en tant qu'antistatique, qui a un effet antistatique de puissance constante sur la feuille de séparation pendant une durée d'au moins 12 mois, non influencé par l'humidité relative de l'air ambiant,
et
(b) au moins une couche (b) à base d'au moins un polymère thermoplastique.

2. Feuille de séparation selon la revendication 1, **caractérisée en ce que** la couche intérieure (a) comprend 11 à 16 % en poids, par rapport au poids total de la couche (a), de l'antistatique.

3. Feuille de séparation selon l'une quelconque des revendications précédentes, **caractérisée en ce que** la feuille de séparation comprend au moins deux couches intérieures (a) (couches (a₁) et (a₂)) chacune munies de l'antistatique.

4. Feuille de séparation selon l'une quelconque des revendications précédentes, **caractérisée en ce qu'**une couche (b) est munie directement de la couche de séparation (c) en tant que couche de surface et est adjacente avec son autre interface à une couche intérieure (a).

5. Feuille de séparation selon l'une quelconque des revendications précédentes, **caractérisée en ce que** le rapport entre l'épaisseur de couche totale de la feuille de séparation et l'épaisseur de couche totale de la ou des couches (a) se situe dans la plage d'au moins 2:1.

6. Feuille de séparation selon la revendication 5, **caractérisée en ce que** le rapport se situe dans la plage d'au moins 7:1.

7. Feuille de séparation selon l'une quelconque des revendications précédentes, **caractérisée en ce que** la couche (b) est à base d'au moins un homo- ou copolymère d'oléfine.

8. Feuille de séparation selon la revendication 7, **caractérisée en ce que** la couche (b) est à base d'au moins un polyéthylène et/ou polypropylène.

9. Procédé de fabrication d'une feuille de séparation selon l'une quelconque des revendications précédentes, **caractérisé en ce qu'**un composite de couches constitué d'au moins une couche (a) munie d'au moins un copolymère séquencé polyéthylène-polyamide à effet antistatique durable en tant qu'antistatique et d'au moins une couche (b) est fabriqué par (co)extrusion ou par stratification, et le composite de couches est muni d'une couche de séparation (c) sur au moins une de ses surfaces.

10. Utilisation d'une feuille de séparation selon l'une quelconque des revendications 1 à 8 en tant que feuille de protection ou de revêtement décollable.

11. Utilisation selon la revendication 10 pour des étiquettes autoadhésives, des bandes adhésives et/ou des autocollants.

12. Utilisation d'une feuille de séparation selon l'une quelconque des revendications 1 à 8 en tant que feuille de rondelle.
